(19) Europäisches Patentamt
European Patent Office
Office européen des brevets

(11) EP 1 030 790 B1

(12) **EUROPÄISCHE PATENTSCHRIFT**

(45) Veröffentlichungstag und Bekanntmachung des Hinweises auf die Patenterteilung:
**02.06.2004 Patentblatt 2004/23**

(21) Anmeldenummer: **99924703.4**

(22) Anmeldetag: **27.03.1999**

(51) Int Cl.$^7$: **B60G 21/055**, B60G 17/015

(86) Internationale Anmeldenummer:
**PCT/DE1999/000930**

(87) Internationale Veröffentlichungsnummer:
**WO 1999/067100 (29.12.1999 Gazette 1999/52)**

(54) **SYSTEM UND VERFAHREN ZUR WANKSTABILISIERUNG VON FAHRZEUGEN**

PROCESS AND SYSTEM FOR STABILISING VEHICLES AGAINST ROLLING

PROCEDE ET SYSTEME POUR STABILISER DES VEHICULES PAR RAPPORT AU ROULIS

(84) Benannte Vertragsstaaten:
**DE FR GB IT**

(30) Priorität: **25.06.1998 DE 19828339**
**08.10.1998 DE 19846275**

(43) Veröffentlichungstag der Anmeldung:
**30.08.2000 Patentblatt 2000/35**

(73) Patentinhaber: **ROBERT BOSCH GMBH**
**70442 Stuttgart (DE)**

(72) Erfinder:
- **SCHUELKE, Armin**
  **D-71706 Hardthof (DE)**
- **VERHAGEN, Armin-Maria**
  **D-71701 Schwieberdingen (DE)**
- **STOLLER, Roland**
  **D-70734 Fellbach (DE)**

(56) Entgegenhaltungen:
**EP-A- 0 292 567**
**DE-A- 3 048 532**
**DE-A- 19 500 869**
**US-A- 4 660 669**

- **PATENT ABSTRACTS OF JAPAN vol. 015, no. 028 (M-1072), 23. Januar 1991 (1991-01-23) & JP 02 270617 A (RHYTHM MOTOR PARTS MFG CO LTD), 5. November 1990 (1990-11-05)**
- **PATENT ABSTRACTS OF JAPAN vol. 012, no. 081 (M-676), 15. März 1988 (1988-03-15) & JP 62 221909 A (MAZDA MOTOR CORP), 30. September 1987 (1987-09-30)**
- **PATENT ABSTRACTS OF JAPAN vol. 199, no. 608, 30. August 1996 (1996-08-30) & JP 08 085328 A (KAYABA IND CO LTD), 2. April 1996 (1996-04-02)**
- **PATENT ABSTRACTS OF JAPAN vol. 016, no. 191 (M-1245), 8. Mai 1992 (1992-05-08) & JP 04 027615 A (NISSAN MOTOR CO LTD), 30. Januar 1992 (1992-01-30)**
- **PATENT ABSTRACTS OF JAPAN vol. 018, no. 245 (M-1603), 11. Mai 1994 (1994-05-11) & JP 06 032134 A (DENDOU KOGYO KK), 8. Februar 1994 (1994-02-08)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 030 790 B1

Printed by Jouve, 75001 PARIS (FR)

## Beschreibung

Stand der Technik

Die Erfindung befaßt sich mit einem System und einem Verfahren zur Wankstabilisierung von Fahrzeugen, insbesondere Kraftfahrzeugen, bei dem Stellmittel vorgesehen sind, die wenigstens einen Sensor zur Erfassung einer Wankgröße und mindestens einen elektromechanischen Schwenkantrieb, der zwischen den beiden Hälften des vorderen und/oder hinteren Fahrwerkstabilisators angeordnet ist, aufweisen, die eine Vorspannung der Stabilisatorhälften zur Reduzierung oder Unterdrückung der Wankbewegung bewirken und die im Wankfall ein Gegenmoment auf den Fahrzeugaufbau abhängig von Ausgangssignalen des Sensors aufbringen.

Ein System mit einem hydraulischen Schwenkantrieb ist aus Konstruktion und Elektronik Nr. 17, Seite 9, 5.8.1992 bekannt.

Bei einem solchen System wird, um die Wankbewegung des Fahrzeugaufbaus bei Kurvenfahrten zu unterdrücken, über eine geeignete Stellfeder ein Gegenmoment auf den Aufbau aufgebracht. Dabei erfolgt die Erzeugung dieses Moments zweckmäßigerweise an den Stabilisatoren der Vorder- und Hinterachse. Die konventionellen, als Drehstabfedern ausgebildeten Stabilisatoren werden aufgetrennt und zwischen den beiden Stabilisatorhälften ein Schwenkantrieb. angeordnet, der eine aktive Verdrehung und somit eine Vorspannung der Stabilisatorhälften erzeugen kann. Mit Hilfe eines solchen Systems werden einerseits der Fahrkomfort, d.h. die Reduzierung bzw. Unterdrückung der Wankbewegung des Fahrzeugaufbaus, Entkopplung der linken und rechten Fahrzeugseite bei einseitigen Fahrbahnanregungen, und andererseits das Fahrverhalten verbessert.

Das oben erwähnte bekannte System verwendet einen hydraulischen Stellantrieb. Ein solcher hydraulischer Stellantrieb benötigt besondere, zum Teil teure Installationen im Fahrzeug, z.B. eine aufwendige Verrohrung. Bei Geradeausfahrt bzw. quasistationären Zuständen des Fahrzeugs muss je nach Ausführung der Druckversorgung ebenfalls eine Leistung aufgebracht werden, so daß auch bei Geradeausfahrt sogenannte Leerlauf-Pumpenverluste auftreten. Im Fahrzeug installierte Hydrauliksysteme haben außerdem den Nachteil, daß bei einem Leck des Systems, z.B. infolge eines Unfalls, umweltschädigende Hydraulikflüssigkeit nach außen treten kann.

Aufgaben und Vorteile der Erfindung

In der Veröffentlichung zum Patent Abstract of Japan vol.015, no.028 (M-1072), 23.Januar 1991 (1991-01-23) &JP 02 270617 wird eine Wankregelung gemäß dem Oberbegriff von Anspruch 1 beschrieben, bei der elektromotorisch Fahrwerkstabilisatoren angesteuert werden. Hierbei ist eine Schneckentrieb mit selbsthemmender Auslegung vorgesehen.

Ausgehend von einem solcher elektromechanisch ausgelegten Wankstabilisierung ist es die Aufgabe der vorliegenden Erfindung, eine unabhängig von dem elektromotorisch ausgelegten Antrieb ausgelegte Blockierung zu erhalten.

Hierzu ist erfindungsgemäß vorgesehen, dass der Schwenkantrieb Mittel aufweist, die zur Blockierung der gegenseitigen Verschwenkung der Stabilisatorhälften von einem Steuergerät angesteuert werden. Durch die Erfindung ist die Unabhängigkeit von Antrieb und Blockiermöglichkeit gegeben.

Das erfindungsgemäße Wankstabilisierungssystem ermöglicht, da es eine reine elektromechanische Stelleinheit aufweist, eine einfache Installation im Fahrzeug. Die Umweltverträglichkeit und auch die Installationskosten sind gegenüber einem hydraulischen System verbessert. Das erfindungsgemäße Wankstabilisierungssystem benötigt keine Leistung bei Geradeausfahrt, da dabei keine Hydraulikpumpenverluste auftreten.

Durch die erfindungsgemäß bevorzugte Verwendung einer elektromagnetisch öffnenden oder schließenden Bremse zur Blockierung läßt sich die benötigte Leistung bei stationären oder quasistationären Fahrmanövern und auch die thermische Belastung des Elektromotors senken. Bei geschlossener Bremse ist ein Überlastschutz erreicht, der ein Durchrutschen bei zu großen Momenten ermöglicht und damit die Bauteile schützt.

Ferner ermöglichen die an der Vorder- und Hinterachse angebrachten elektromechanischen Schwenkantriebe auch eine Verringerung der Wankbewegung bei geschlossener Bremse oberhalb der stellbaren Momente.

Der Einsatz einer elektromagnetisch öffnenden oder schließenden Bremse hängt im wesentlichen von der verfolgten Systemausfallstrategie ab. Bei elektromagnetisch schließender Bremse sind bei Systemausfall die Stabilisatorhälften an der Vorder- und Hinterachse getrennt. Das Wank- und Eigenlenkverhalten wird damit nur von den konventionellen Feder- und Dämpferelementen bestimmt.

Bei elektromagnetisch öffnender Bremse muß durch geeignete Maßnahmen sichergestellt sein, daß bei Systemausfall der elektromechanische Stellantrieb an Vorder- und Hinterachse jeweils nur in Mittelstellung blockiert werden kann, um eine Schrägstellung des Fahrzeugaufbaus bei Geradeausfahrt zu vermeiden. Die in dieser Weise gegeneinander blockierten Stabilisatorhälften wirken dann wie passiven Drehstabfedern. Durch die Wahl der Drehsteifigkeiten wird das Wank- und Eigenlenkverhalten festgelegt.

Eine zusätzliche Verbesserung des Komforts kann durch Einsatz einer Kupplung zwischen Antriebs- und Abtriebsseite der Stelleinheit erreicht werden. Abhängig von der Anordnung der Kupplung können der Elektromotor und/oder das Getriebe oder auch einzelne Getriebestufen von der Abtriebsseite der Stelleinheit getrennt und durch die damit reduzierten Trägheitsmomente die Entkopplung der linken und rechten Fahrzeugseite verbessert werden. Je nach Ausführung kann jeweils eine separate Bremse und/oder Kupplung oder eine entsprechende Bremsen-Kupplungs-Kombination verwendet werden.

Als ein eine Wankgröße (Rollen) des Fahrzeugs erfassender Sensor kann vorteilhafterweise ein Querbeschleunigungssensor verwendet werden. Außerdem kann vorteilhafterweise ein Sensor zur Erfassung des Lenkradwinkels und ein weiterer Sensor zur Erfassung der Fahrzeuggeschwindigkeit vorgesehen sein.

Der Sensor oder die Sensoren, der elektromechanische Stellantrieb und die Bremse sind vorteilhafterweise jeweils mit einem elektronischen Steuergerät zur Erzeugung entsprechender Ansteuersignale für den elektromechanischen Schwenkantrieb und die Bremse abhängig von den von den Sensoren aufgegebenen Signalen mit Hilfe von im elektronischen Steuergerät ausgeführten vorgegebenen oder lernenden Algorithmen verbunden.

Das das erfindungsgemäße Wankstabilisierungssystem verwendende Verfahren zur Wankstabilisierung von Fahrzeugen ist durch folgende Schritte gekennzeichnet:

I. Bestimmung des maximalen stellbaren Moments aus den Größen:

- maximales Motormoment des elektrischen Schwenkmotors,
- Getriebeuntersetzung des Getriebes,
- Wirkungsgrad, und
- Verlustmomenten;

II. Ermittlung des geforderten Stellmoments;

III. Öffnen der Bremse und Aufbringen des Moments auf der Niedrigmomentenseite des Schwenkmotors, wenn das geforderte Stellmoment unterhalb des maximalen Stellmoments liegt;

IV. Schließen der Bremse, wenn das geforderte Stellmoment das maximale Stellmoment des Schwenkantriebs überschreitet; und

V. Erzeugung von Sollströmen für die Schwenkmotoren zur Erzeugung eines zur Wankstabilisierung dienenden Gegenmoments.

Das erfindungsgemäße Wankstabilisierungssystem läßt sich außerdem bei stehendem Fahrzeug für bestimmte Horizontierungs- und Neigungseffekte des Fahrzeugaufbaus sowie zum Anheben oder Absenken einzelner Räder verwenden. Dabei sind insbesondere folgende Anwendungen realisierbar:

- Manuelles oder automatisches Horizontieren eines Fahrzeugs um seine Längsachse durch entsprechendes Bestromen der Schwenkantriebe und Fixieren durch Schließen der Bremsen, z.B. eines am Hang stehenden Fahrzeugs oder bei einem einseitig auf einem Bordstein stehend Wohnmobil o.ä.;
- manuelles oder automatisches Horizontieren eines Fahrzeugs um seine Längsachse im Stand, wenn das Fahrzeug mit einem einzelnen Rad in einer Vertiefung steht;
- Verwendung des Wankstabilisierungssystems als Einstiegs- oder Ausstiegshilfe mit leichterem Türöffnen bzw.
- schließen durch definierte Neigung des Fahrzeugaufbaus;
- Verwendung des Wankstabilisierungssystems zum einfacheren Beladen eines Dachgepäckträgers, Fahrradträgers etc. durch Neigen des Aufbaus bei horizontal bleibender Längsachse;
- Verwendung des Wankstabilisierungssystems zum Anheben einzelner Räder, z.B. zum Radwechsel, durch diagonale Verspannung des vorderen und hinteren Schwenkantriebs;
- Verwendung des Wankstabilisierungssystems zum definierten Neigen des Fahrzeugaufbaus oder Anheben einzelner Räder durch entsprechende Bestromung der Schwenkantriebe und anschließendes Fixieren der Bremsen, z.B. damit Gegenstände o.ä. leichter unter dem Fahrzeug entfernt werden können oder um eine Zugänglichkeit zum Unterboden des Fahrzeugs zu schaffen, beispielsweise für Reparaturarbeiten.

Weitere vorteilhafte Merkmale sind in abhängigen Verfahrensansprüchen und in der nachfolgenden Beschreibung unter Bezug auf die Zeichnung enthalten.

ZeichnungZeichnung

| | |
|---|---|
| Fig. 1 | zeigt schematisch ein das erfindungsgemäße Wankstabilisierungssystem anwendendes Kraftfahrzeug. |
| Fig. 2 | zeigt schematisch den zwischen einer linken und rechten Stabilisatorhälfte angeordneten elektromechanischen Schwenkantrieb gemäß der Erfindung. |
| Fig. 3 | stellt in Form eines Blockschaltbildes eine Funktionsstruktur zur Ansteuerung der Stellglieder an der vorder- und Hinterachse des erfindungsgemäßen Wankstabilisierungssystems dar. |
| Die Fig. 4A,4B,4C | erläutern in Form von Flußdiagrammen die Ausführung des Funktionsblocks D gemäß Fig. 3. |
| Fig. 4D | erläutert in Form eines Flußdiagramms den Ablauf in den Funktionsblöcken F und G der Fig. 3. |

In dem in Fig. 1 schematisch dargestellten Kraftfahrzeug (PKW) ist ein erster elektromechanischer Schwenkantrieb 1 zwischen der linken und rechten Hälfte eines der Vorderachse VA zugeordneten Drehstabs und ein zweiter elektromechanischer Schwenkantrieb 2 zwischen der linken und rechten Hälfte eines der Hinterachse HA zugeordneten Drehstabs angeordnet. Ein Sensor 3 ist beispielshaft ein Querbeschleunigungssensor zur Erfassung der Querbeschleunigung des Kraftfahrzeugs. Ferner ist ein im Kraftfahrzeug angebrachtes Steuergerät 4 über (nicht gezeigte) Verbindungsleitungen jeweils mit dem Sensor 3 und den elektromechanischen Stellantrieben 1 und 2 verbunden. Die im Drehstab der Vorderachse VA und im Drehstab der Hinterachse HA eingebauten elektromechanischen Schwenkantriebe erzeugen eine aktive Verdrehung und somit eine Vorspannung der jeweiligen Stabilisatorhälften. Das in den Stabilisatoren erzeugte Vorspannmoment stützt sich einerseits an der linken und rechten Radaufhängung sowie über die Lagerung am Aufbau des Kraftfahrzeugs ab. Die über die Lagerung am Aufbau eingeleiteten Kräfte erzeugen dann das zur Wankstabilisierung benötigte Moment.

Selbstverständlich kann zusätzlich zu dem vom Sensor 3 erzeugten Querbeschleunigungssignal auch jeweils ein Sensor vorgesehen sein, der einen Lenkwinkelwert und die Fahrgeschwindigkeit oder einen sonstigen für die Ansteuerung der Schwenkantriebe zu verarbeitenden Wert ermittelt.

Fig. 2 zeigt schematisch den zur Erzeugung der Vorspannmomente dienenden elektromechanischen Schwenkantrieb 1 bzw. 2. Dieser besteht im wesentlichen aus drei Grundkomponenten, nämlich einem Elektromotor 6, einem Untersetzungsgetriebe 8 und einer dazwischenliegenden Bremse 7.

Das vom Elektromotor 6 erzeugte Moment wird über das Untersetzungsgetriebe 8 in das zur Vorspannung der Stabilisatoren benötigte Moment umgewandelt. Eine Stabilisatorhälfte 11 ist über die Lagerung 13 direkt mit dem Gehäuse des elektromechanischen Schwenkantriebs 1 bzw. 2 und die andere Stabilisatorhälfte 12 mit der Ausgangsseite (Hochmomentseite) des Untersetzungsgetriebes 8 verbunden und in einer Lagerung 14 gelagert.

Wie erwähnt, erfolgt die Ansteuerung des Elektromotors 6 und der Bremse 7 über das in Fig. 1 dargestellte Steuergerät 4 und eine damit verbundene Leistungselektronik, die ihrerseits die entsprechenden Ansteuersignale vom Steuergerät 4 erhält.

Bei den stationären bzw. quasistationären Fahrmanövern, d.h. wenn keine oder nur geringe Änderungen des benötigten Moments zur Stabilisierung des Fahrzeugaufbaus vorliegen, d.h. von den Sensoren erkannt werden, kann die gemäß Fig. 2 an der Niedrigmomentseite des Getriebes 8 bzw. auf der Motorwelle des Elektromotors 6 angeordnete Bremse 7 geschlossen und anschließend der Elektromotor 6 abgeschaltet werden. Auf diese Weise wird die für das Haltemoment benötigte Leistung je nach Ausführung der Bremse 7 entweder auf 0 bzw. auf ein Minimum verringert und damit die thermische Belastung des Elektromotors 6 reduziert.

Wenn von den Sensoren ein Übergang vom stationären zum instationären Betrieb erkannt wird, ist das unmittelbar vor dem Schließen der Bremse 7 wirkende Moment am Elektromotor 6 wieder einzustellen und anschließend die Bremse 7 zu lösen. Zweckmäßigerweise erfolgt die Einstellung dieses Drehmoments durch Vorgabe des Sollwerts für den Motorstrom, der unmittelbar vor Schließen der Bremse eingestellt war. Bei Kenntnis des aktuell wirkenden Moments im Stabilisator vor Öffnen der Bremse 7 ist der vor dem Schließen der Bremse 7 gespeicherte Wert gegebenenfalls zu korrigieren, um einen möglichst sanften Übergang zwischen dem Zustand " Bremse geschlossen" und " Bremse offen" zu erhalten.

Für die einzelnen Komponenten 6, 7 und 8 und des elektromechanischen Stellantriebs 1, 2 können verschiedene Bauformen und Prinzipien zum Einsatz kommen:

Als Elektromotor 6 kommt z.B. ein

- permanenterregter oder fremderregter Gleichstrommotor (mechanisch oder elektronisch kommutiert;
- Reluktanzmotor;
- Wanderwellenmotor;
- Schrittmotor;
- Synchron- oder Asynchronmotor;
- Splitfeldmotor

in Frage.

Als Untersetzungsgetriebe 8 kommt insbesondere ein

- ein- oder mehrstufiges Planetengetriebe, Koppel- oder
- Differenzengetriebe (Cyclogetriebe, Harmonic Drive, Wolfromgetriebe, ...)

in Frage.

Die Bremse 7 kann eine elektromagnetisch öffnende oder auch eine elektromagnetisch schließende Bremse sein.

Mit Hilfe der Bremse 7 läßt sich die benötigte Leistung bei stationären bzw. quasistationären Fahrmanövern und außerdem die thermische Belastung des Elektromotors verringern. Die Bremse bildet in ihrem geschlossenen Zustand einen Überlastschutz, ermöglicht dadurch ein Durchrutschen bei zu großen Momenten und bietet damit Schutz der Bauteile/Komponenten. Außerdem verringert die Bremse 7 in ihrem geschlossenen Zustand die Wankbewegung oberhalb der mit dem Elektromotor 6 stellbaren Momente.

Beim Einsatz einer elektromagnetisch schließenden Bremse muß beachtet werden, daß bei einem Systemausfall die Stabilisatorhälften an der Vorder- und Hinterachse getrennt sind. Das Wank- und Eigenlenkverhalten wird damit nur von den konventionellen Feder- und Dämpfungselementen bestimmt.

Bei einer elektromagnetisch öffnenden Bremse 7 wird durch geeignete Maßnahmen sichergestellt, daß bei Systemausfall der Stellantrieb an Vorder- und Hinterachse jeweils nur in seiner Mittelstellung blockiert werden kann, um so eine Schrägstellung des Fahrzeugaufbaus bei Geradeausfahrt zu vermeiden. Die in dieser Weise gegeneinander blockierten Stabilisatorhälften 11, 12 wirken dann wie passive Drehstabfedern. Durch die Wahl der Drehsteifigkeit der Drehstabfedern wird das Wank- und Eigenlenkverhalten festgelegt.

Eine in Fig. 2 nicht gezeigte, zusätzliche Kupplung zwischen Antriebs- und Abtriebsseite des in Fig. 2 gezeigten elektromechanischen Schwenkantriebs kann den Komfort zusätzlich verbessern.

Abhängig von der Anordnung der Kupplung können der Elektromotor 6 und/oder das Untersetzungsgetriebe 8 oder auch einzelne Getriebestufen desselben ohne sonstige Bauteile von der Abtriebsseite der Stelleinheit 1, 2 getrennt und durch die damit reduzierten Trägheitsmomente die Entkopplung der linken und rechten Fahrzeugseite verbessert werden. Je nach Ausführung kann jeweils eine separate Bremse und/oder Kupplung oder auch eine entsprechende Bremsen-Kupplungs-Kombination verwendet werden.

Wird die Entkopplung zwischen linker und rechter Fahrzeugseite durch andere Maßnahmen, wie z.B. durch die Verwendung von Stabilisatorhälften mit niedriger Drehsteifigkeit erreicht, ist alternativ zu einer Bremse auch der Einsatz einer, z.B. zwischen dem Elektromotor 6 und dem Getriebe 8 angeordneten Lastmomentsperre (das ist ein selbsttätig schaltender, doppelseitig wirkender Freilauf) möglich, die verhindert, daß ein äußeres, z.B. vom Fahrzeugaufbau eingeleitetes Moment die Stabilisatorhälften 11, 12 gegeneinander verdreht und dadurch die Haltemomente aufnimmt.

Alternativ zur Lastmomentsperre können das Getriebe 8 oder z.B. einzelne Getriebestufen selbsthemmend ausgeführt sein, um von außen eingeleitete Momente abzustützen und eine Verdrehung der Stabilisatorhälften zu verhindern.

Ausgehend von dem erfindungsgemäßen elektromechanischen System zur Wankstabilisierung wird nachfolgend ein Steuer/Regelalgorithmus dargestellt, der auch außerhalb des Stellbereichs des elektromechanischen Stellantriebs eine gegenüber dem passiven Fahrzeug reduzierte Wankbewegung ermöglicht. Weiterhin wird die gewünschte Wankmomentverteilung gewährleistet, solange das Stellglied einer Achse die Stellgrößenbegrenzung noch nicht erreicht hat.

Das maximal stellbare Moment wird durch das maximale Motormoment und die vorliegende Getriebeübersetzung unter Berücksichtigung von Wirkungsgraden und weiteren Verlustmomenten bestimmt. Liegt das geforderte Stellmoment unterhalb des maximalen Stellmoments, ist die Haltebremse 7 geöffnet, und das Moment auf der Niedrigmomentenseite des Getriebes 8 muß durch den Elektromotor 6 übernommen werden. Überschreitet an einer Achse VA, HA das geforderte Moment den Maximalwert, wird die Bremse 7 geschlossen und das Moment von der Bremse 7 übernommen. Bei einer weiteren Zunahme der Querbeschleunigung und damit einer auftretenden Wankbewegung des Aufbaus wirken die Stabilisatorhälften 11, 12 wie im passiven Fall und können ein zusätzliches Moment aufnehmen, wodurch sichergestellt ist, daß die Wankbewegung auch bei Überschreiten des maximalen Stellbereichs kleiner ist als im passiven Fall. Ohne eine entsprechende Haltebremse 7 würde beim Überschreiten des maximalen Stellbereichs der Motor 6 über das durch die Aufbaubewegung eingeleitete äußere Moment zurückgedreht werden, ohne ein zusätzliches Moment aufzunehmen.

Das Blockschaltbild in Fig. 3 zeigt eine Funktionsstruktur zur Ansteuerung der Stellglieder an Vorder- und

Hinterachse. In Block A wird aus den Größen Lenkradwinkel $ä_{LR}$, Querbeschleunigung $a_Q$ und Fahrgeschwindigkeit $V_X$ das zur Wankabstützung benötigte Moment $M_X$ auf den Fahrzeugaufbau ermittelt und im Block B tiefpaßgefiltert. Zusätzlich wird in Block A ein Vorhaltemoment $M_{X, VOR}$ bestimmt.

Die auf den Fahrzeugaufbau bezogenen Momente $M_X$ und $M_{X, VOR}$ werden unter Berücksichtigung der Wankmomentverteilung WMV sowie der geometrischen Verhältnisse auf die entsprechenden Sollmomente $M_{ST, VA}$ , $M_{ST, HA}$ , $M_{ST, VA, VOR}$ und $M_{ST, HA, VOR}$ an der Vorderund Hinterachse VA, HA transformiert (Block C). In Block D wird die Anpassung der Sollmomente $M_{ST, VA}$ und $M_{ST, HA}$ unter Berücksichtigung der Stellgrößenbegrenzung durchgeführt und die Aktivierung der Haltebremse(n) 7 vorgenommen. Ausgangsgrößen sind die modifizierten Stellmomente $M^*_{ST, VA}$ und $M^*_{ST,HA}$ sowie Flags BREMS-A-VA und BREMS-A-HA für die Bremsansteuerung. Im Fall, daß die Bremsen 7 an Vorderund/oder Hinterachse VA, HA geschlossen sind, entspricht $M^*_{ST, VA}$ und $M^*_{ST,HA}$ dem wirkenden Gesamtmoment im Stabilisator, das sich aus der aktiven Vorspannung sowie der durch die zusätzliche Aufbaubewegung erzeugten Verdrehung ergibt. In Block E wird aus Lenkradwinkel $ä_{LR}$ und Querbeschleunigung $a_Q$ ermittelt, ob aktuell ein stationärer oder instationärer Fahrzustand vorliegt und diese Information über das Flag FZST an Block D zur Ansteuerung der Haltebremsen übergeben. In den Blöcken F und G werden aus den modifizierten Sollmomenten $M^*_{ST,VA}$ und $M^*_{ST, HA}$, den Vorhaltemomenten $M_{ST, VA, VOR}$ und $M_{ST,HA,VOR}$ sowie den Winkelgeschwindigkeiten $_{ST,VA}$ und $_{ST,HA}$ der Stellantriebe die Sollströme $I_{soll,VA}$ und $I_{soll,HA}$ für die Elektromotoren bestimmt und zusammen mit den Ansteuersignalen $BREMS_{VA}$ und $BREMS_{HA}$ für die Bremsen 7 an den Vorderachs- und Hinterachsstellantrieb ausgegeben.

Im folgenden wird der Funktionsblock D anhand von Flußdiagrammen (Fig. 4A, 4B, 4C) näher beschrieben. Die verwendeten Flags haben dabei folgende Bedeutung:

FZST = 0:Fahrzustand instationär

= 1:Fahrzustand stationär

BREMS-A-VA = 0:Haltebremse VA öffnen bzw. offen

= 1:Haltebremse VA schließen bzw.

geschlossen

BREMS-A-HA = 0:Haltebremse HA öffnen bzw. offen

= 1:Haltebremse HA schließen bzw.

geschlossen.

Der Algorithmus gliedert sich in zwei Abschnitte. Während im ersten Teil (Fig. 4A) die modifizierten Ausgangsmomente $M^*_{ST,VA}$ und $M^*_{ST,HA}$ ermittelt werden, werden im zweiten Abschnitt (Fig. 4B und 4C) die Flags BREMS-A-VA und BREMS-A-HA für die Bremsansteuerung in Abhängigkeit von $M^*_{ST,VA}$ und $M^*_{ST,HA}$ gesetzt.

Zunächst erfolgt in Schritt S10 eine Abfrage, ob ein stationärer oder instationärer Fahrzustand vorliegt. Bei stationärem Fahrzustand werden unabhängig vom Zustand der Bremsen 7 (offen - geschlossen) die aktuellen Momente $M^*_{ST,VA}$ und $M^*_{ST,HA}$ aus den Eingangsmomenten $M_{ST,VA}$ und $M_{ST,HA}$ sowie aus der gemessenen Querbeschleunigung $a_Q$ berechnet (Schritte S14, S19) und die Flags BREMS-A-VA und BREMS-A-VA für Vorder- und Hinterachse VA, HA auf 1 gesetzt (Schritte S24, S25) .

Liegt kein stationärer Fahrzustand (FZST=0) vor, wird im ersten Abschnitt (Fig. 4A, Schritte S11 bis S13) geprüft, ob die Bremsen 7 an Vorder- und/oder Hinterachse VA, HA bereits geschlossen sind, d.h. ob die Flags BREMS-A-VA=1 bzw. BREMS-A-HA=1 sind. Sind beide Bremsen geöffnet, sind die Ausgangsmomente $M^*_{ST,VA}$ und $M^*_{ST,HA}$ gleich den Eingangsmomenten $M_{ST, VA}$ und $M_{ST, HA}$ (Schritte S18, S23) . Sind die Bremsen 7 an einer oder beiden Achsen VA, HA geschlossen, d.h. BREMS-A-VA=1 bzw. BREMS-A-HA=1, wird das Moment $M^*_{ST,VA}$ und $M^*_{ST,HA}$ an der jeweiligen Achse aus dem Moment $M_{ST,VA}$ und $M_{ST,HA}$ sowie der gemessenen Querbeschleunigung $a_Q$ berechnet (Schritte S15, S20) . Ist z.B. die Bremse an der Vorderachse geschlossen und an der Hinterachse geöffnet, d.h. BREMS-A-VA=1 und BREMS-A-HA=0 (Schritt 12), wird das Ausgangsmoment $M^*_{ST,HA}$ aus den Eingangsmomenten $M_{ST, VA}$ und $M_{ST, HA}$ sowie dem zuvor berechneten Moment $M^*_{ST,VA}$ ermittelt (Schritt S16, S21) . Die gewünschte Wankmomentverteilung ist dabei bereits in den Eingangsmomenten $M_{ST, VA}$ und $M_{ST, HA}$ sichergestellt. Ist die Bremse an der Vorderachse geöffnet und an der Hinterachse geschlossen, d.h. BREMS-A-VA=0 und BREMS-A-HA=1 (Schritt S13) , erfolgt das Vorgehen analog (S17 und S22):

Ausgehend von den im ersten Abschnitt (Fig. 4A) ermittelten Momenten $M^*_{ST,VA}$ und $M^*_{ST,HA}$ werden im zweiten Abschnitt (Fig. 4B, Fig. 4C) die Flags BREMS-A-VA und BREMS-A-HA für die Bremsansteuerung gesetzt. Da der Algorithmus an Vorder- und Hinterachse gleich ist, ist es hier in dieser Beschreibung ausreichend, nur die Vorderachse zu betrachten.

Fig. 4B beschreibt den Funktionsablauf für die Vorderachse VA und Fig. 4C den für die Hinterachse HA.

Liegt kein stationärer Fahrzustand (FZST=0) vor (Schritt S10), erfolgt zunächst die Abfrage (Schritt S26), ob das aktuelle Ausgangsmoment $M^*_{ST,VA}$ größer als das maximale Stellmoment $M^*_{max,VA}$ ist. Wenn nein, wird geprüft (Schritt S27, 27'), ob die Bremse 7 offen oder geschlossen ist. Ist die Bremse offen, d.h. BREMS-A-VA=0, befindet man sich im " normalen" Regelzyklus, in dem das Stellmoment durch den Elektromotor 6 aufgenommen wird. Ist die Bremse 7 dagegen geschlossen, d.h. BREMS-A-VA=1, bedeutet dies, daß das notwendige Moment $M^*_{ST,VA}$ zuvor außerhalb des Stellbereichs war und durch die Bremse übernommen wurde. Erst wenn das Moment $M^*_{ST,VA}$ für eine festgelegte Zeit $t_{auf}$ unterhalb des maximalen Moments $M_{max,VA}$ liegt (S30, 30') , wird das Flag BREMS-A-VA auf 0 gesetzt, um die Bremse 7 zu öffnen (S36, 36') .

Ist das aktuelle Moment $M^*_{ST,VA}$ dagegen größer als das maximale Stellmoment $M_{max,VA}$, wird ebenfalls geprüft, ob die Bremse offen oder geschlossen ist (S28, S28'). Ist die Bremse geschlossen, d.h. BREMS-A-VA=1, bedeutet dies, daß das Moment bereits durch die Bremse 7 aufgenommen wurde. Ist die Bremse dagegen offen, d.h. BREMS-A-VA=0, ist das maximale Stellmoment $M_{max, VA}$ überschritten worden. Liegt das notwendige Moment $M^*_{ST,VA}$ für eine bestimmte Zeit $t_{zu}$ oberhalb des maximalen Moments $M_{max, VA}$ (S29, S29'), wird das Flag BREMS-A-VA auf 1 gesetzt, um die Bremse zu schließen (S23, S23'). Die Zeitabfragen $t_{VA} > t_{auf}$ bzw. $t_{VA} > t_{zu}$ sollen verhindern, daß die Bremse bei kleinen Schwankungen von $M^*_{ST,VA}$ um den Grenzwert $M_{max, VA}$ ständig öffnet und schließt.

Die ermittelten Momente $M^*_{ST,VA}$ und $M^*_{ST,HA}$ und die Flags BREMS-A-VA und BREMS-A-HA werden an die Blöcke F und G weitergeleitet, die ihrerseits die Sollströme und Ansteuersignale der Bremsen an den Vorder- und Hinterachsstellantrieb ausgeben. Das Ablaufschema der Blöcke F und G ist in Fig. 4D dargestellt. Da die Funktion für die Vorder- und Hinterachse VA, HA identisch ist, wird im Ablaufdiagramm gem. Fig. 4D keine Unterscheidung in der Indizierung vorgenommen.

Das Setzen des Ansteuersignals BREMS für die Bremse und die Vorgabe des Sollstromes $I_{soll}$ erfolgt zeitlich gesteuert. Im Vergleich zum Flag BREMS-A, welches dem " Wunsch" zum Öffnen oder Schließen der Bremse entspricht, stellt BREMS das direkte Ansteuersignal für die Bremse dar, das analog oder digital vom Steuergerät ausgegeben wird.

Der Funktionsblock kann in vier Modi - OFFEN, OEFFNEN, SCHLIESSEN, GESCHLOSSEN - unterteilt werden. Der Modus OFFEN entspricht dem " normalen" Regelzyklus, d.h. BREMS-A=0 und BREMS=0 (Schritte S40, S41, S42, S43, S44). Der Sollstrom $I_{soll}$ ergibt sich als Funktion von $M^*_{ST,VOR}$ und $_{ST}$. Wird das Flag BREMS-A von 0 auf 1 gesetzt, wird in den Modus SCHLIESSEN gewechselt und das Ansteuersignal BREMS=1 ausgegeben (S46). Für eine festgelegte Zeit $t_{shl}$ wird der Sollstrom $I_{soll}$ entsprechend dem " normalen" Regelzyklus bestimmt (S50-S53), wobei die Zeit $t_{shl}$ abhängig von der Schließzeit der Bremse zu wählen ist. Für $t>t_{shl}$ (S47) wird der Sollstrom $I_{soll}$=0 gesetzt (S48, S49) und in den Modus GESCHLOSSEN gewechselt (S53, S55). Das Moment im Stabilisator wird jetzt vollständig von der Bremse 7 aufgenommen. Wird das Flag BREMS-A von 1 auf 0 gesetzt (S41), wird in den Modus OEFFNEN gewechselt und der Sollstrom von 0 auf den aktuellen Strom entsprechend dem " normalen" Regelzyklus hochgefahren. Für eine festgelegte Zeit $t_{I, aufb}$ (S58) wird die Bremse geschlossen gehalten (S61-S63) . Für $t>t_{I, aufb}$ (S58) wird dann die Bremse geöffnet, d.h. BREMS=0 (S60) ausgegeben. Die Zeit $t_{I, aufb}$ entspricht der Zeit, die benötigt wird, um den Strom aufzubauen und damit das anstehende Moment wieder durch den Elektromotor 6 zu übernehmen. Anschließend wird in den Modus OFFEN gewechselt.

Das erfindungsgemäße System zur Wankstabilisierung von Fahrzeugen läßt sich, wie erwähnt, auch bei stehendem Fahrzeug zur manuellen oder automatischen definierten Neigung des Fahrzeugaufbaus, zur Horizontierung des Fahrzeugs um seine Längsachse und für weitere Eingriffe in das Lagesystem des Fahrwerks des Fahrzeugs und damit seines Aufbaus verwenden. Fahrzeuge, die beispielsweise auf einer schrägen Fahrbahnoberfläche abgestellt sind, lassen sich auf diese Weise durch eine entsprechende Bestromung der Schwenkantriebe und anschließendes Fixieren durch Schließen der Bremsen manuell oder automatisch horizontieren. Durch eine definierte Neigung des Fahrzeugaufbaus des stehenden Fahrzeugs mit Hilfe des erfindungsgemäßen Wankstabilisierungssystems läßt sich eine Ein- und Ausstiegshilfe erreichen, wobei sich die Türen leichter öffnen bzw. schließen lassen. Desgleichen läßt sich ein Dachgepäckträger oder eine Ladefläche leichter beladen, indem durch eine definierte Bestromung der Schwenkantriebe und anschließendes Fixieren durch Schließen der Bremsen der Fahrzeugaufbau des stehenden Fahrzeugs definiert geneigt wird. Schließlich lassen sich auch einzelne Räder, beispielsweise zum Radwechsel, durch diagonale Verspannung der Schwenkantriebe und anschließendes Fixieren durch das Schließen der Bremsen definiert anheben, sowie die Karosserie zur leichteren Zugänglichkeit von unten, z.B. zu Reparaturarbeiten, definiert neigen.

## Patentansprüche

1. System zur Wankstabilisierung von Fahrzeugen, insbesondere Kraftfahrzeugen, bei dem Stellmittel vorgesehen sind, die wenigstens einen Sensor (3) zur Erfassung einer Wankgröße und mindestens einen Schwenkantrieb (1, 2), der zwischen Hälften (11, 12) des vorderen und/oder hinteren Fahrwerkstabilisators angeordnet ist, aufweisen, die eine Vorspannung der Stabilisatorhälften (11, 12) zur Reduzierung oder Unterdrückung der Wankbewegung bewirken und die im Wankfall ein Gegenmoment auf den Fahrzeugaufbau abhängig von Ausgangssignalen des Sensors (3) aufbringen, wobei der Schwenkantrieb ein elektromechanischer Schwenkantrieb (1, 2) ist, und Mittel (7) zur Blockierung der gegenseitigen Verschwenkung der Stabilisatorhälften (11, 12) aufweist, **dadurch gekennzeichnet, daß** die Mittel (7) zur Blockierung der gegenseitigen Verschwenkung der Stabilisatorhälfen (11, 12) von einem Steuergerät (4) angesteuert werden.

2. System zur Wankstabilisierung nach Anspruch 1, **dadurch gekennzeichnet, daß** die Blockierungsmittel eine elektromagnetisch öffnende oder elektromagnetisch schließende Bremse (7) aufweisen, die bei jedem Schwenkantrieb (1, 2) zwischen einem jeweiligen Schwenkmotor (6) und einem Untersetzungsgetriebe (8) desselben angeordnet ist.

3. System zur Wankstabilisierung nach Anspruch 2, **dadurch gekennzeichnet, daß** bei elektromagnetisch öffnender Bremse (7) Mittel vorgesehen sind, die den elektromechanischen Schwenkantrieb (1, 2) an Vorderund Hinterachse (VA, HA) bei Systemausfall nur in einer neutralen Mittelstellung blockieren.

4. System zur Wankstabilisierung nach einem der vorangehenden Ansprüche, **dadurch gekennzeichnet, daß** zwischen der Antriebs- und der Abtriebsseite des elektromechanischen Schwenkantriebs (1, 2) eine Kupplung so eingesetzt ist, daß der elektrische Schwenkmotor (6) und/oder das Untersetzungsgetriebe (8) oder einzelne Getriebestufen desselben von der Abtriebsseite des Schwenkantriebs (1, 2) trennbar sind.

5. System zur Wankstabilisierung nach einem der Ansprüche 2-4, **dadurch gekennzeichnet, daß** das System eine Bremsen-Kupplungs-Kombination enthält.

6. System zur Wankstabilisierung nach einem der vorangehenden Ansprüche, **dadurch gekennzeichnet, daß** der wenigstens eine Sensor (3) ein Querbeschleunigungssensor ist.

7. System zur Wankstabilisierung nach einem der vorangehenden Ansprüche, **dadurch gekennzeichnet, daß** außerdem ein Sensor zur Erfassung des Lenkradwinkels ($ä_{LR}$) und ein weiterer Sensor zur Erfassung der Fahrzeuggeschwindigkeit ($v_x$) vorgesehen sind.

8. System zur Wankstabilisierung nach einem der vorangehenden Ansprüche, **dadurch gekennzeichnet, daß** der Sensor oder die Sensoren, der elektromechanische Stellantrieb und die Bremse jeweils mit einem elektronischen Steuergerät (4) zur Erzeugung entsprechender Ansteuersignale für den elektromechanischen Schwenkantrieb und die Bremse jeweils der Vorderachse (VA) und Hinterachse (HA) verbunden sind.

9. Verfahren zur Wankstabilisierung von Fahrzeugen, insbesondere Kraftfahrzeugen mit Hilfe eines Wankstabilisierungssystems nach einem der Ansprüche 1-8, **gekennzeichnet durch** folgende Schritte (Blöcke C, D, G)

   I. Bestimmung des maximalen stellbaren Moments aus den Größen:

   - maximales Motormoment des elektrischen Schwenkmotors,
   - Getriebeuntersetzung des Getriebes,
   - Wirkungsgrad, und
   - Verlustmomente ;

   II. Ermittlung des geforderten Stellmoments;

   III. Öffnen der Bremse und Aufbringen des Moments auf der Niedrigmomentenseite des Schwenkmotors (6), wenn das geforderte Stellmoment unterhalb des maximalen Stellmoments liegt;

IV. Schließen der Bremse (7), wenn das geforderte Stellmoment das maximale Stellmoment des Schwenkantriebs überschreitet; und

V. Erzeugung von Sollströmen für die Schwenkmotoren zur Erzeugung eines zur Wankstabilisierung dienenden Gegenmoments.

**10.** Verfahren zur Wankstabilisierung nach Anspruch 9, **dadurch gekennzeichnet, daß** im Schritt II (Block C) das zur Wankabstützung geforderte Stellmoment ($M_x$) auf den Fahrzeugaufbau aus dem erfaßten Lenkradwinkel ($ä_{LR}$), der erfaßten Querbeschleunigung ($a_Q$) und der erfaßten Fahrgeschwindigkeit ($v_x$) ermittelt wird.

**11.** Verfahren zur Wankstabilisierung nach Anspruch 10, **dadurch gekennzeichnet, daß** im Schritt II (Block C) zusätzlich ein auf den Fahrzeugaufbau bezogenes Vorhaltemoment ($M_{x, VOR}$) ermittelt wird.

**12.** Verfahren zur Wankstabilisierung nach Anspruch 11, **dadurch gekennzeichnet, daß** weiterhin die auf den Fahrzeugaufbau bezogenen Momente ($M_x$, $M_{x, VOR}$) unter Berücksichtigung einer Wankmomentverteilung (WMV) sowie der geometrischen Verhältnisse zu entsprechenden Sollmomenten ($M_{ST, VA}$, $M_{ST, HA}$, $M_{ST, VA, VOR}$, $M_{ST, HA, VOR}$) der Stellglieder an der Vorder- und Hinterachse (VA, HA) transformiert werden (Block C).

**13.** Verfahren zur Wankstabilisierung nach Anspruch 12, **dadurch gekennzeichnet, daß** weiterhin die entsprechenden Sollmomente ($M_{ST, VA}$, $M_{ST, HA}$) für die Vorder- und Hinterachse (VA, HA) unter Berücksichtigung der Stellgrößenbegrenzung angepaßt werden, und daß Bremsansteuerungssignale (Brems-A-VA, Brems-A-HA) für die Schritte III und IV auf der Grundlage der angepaßten Sollmomente ($M^*_{ST,VA}$ und $M^*_{ST,HA}$) und eines auf der Basis des erfaßten Lenkwinkels ($ä_{LR}$) sowie der erfaßten Querbeschleunigung ($a_Q$) ermittelten aktuellen Fahrzustands (FZST) (stationär oder nichtstationär) erzeugt werden (Block D).

**14.** Verfahren zur Wankstabilisierung nach einem der Ansprüche 9 bis 13, **dadurch gekennzeichnet, daß** in Schritt V (Block G) aus den angepaßten Sollmomenten ($M^*_{ST, VA}$ und $M^*_{ST, HA}$) , den Vorhaltemomenten ($M_{ST,VA,VOR}$ und $M_{ST,VA,VOR}$) sowie den Winkelgeschwindigkeiten $_{ST, VA}$ und $_{ST, KA}$) die Sollströme ($I_{SOLL, VA}$ und $I_{SOLL,HA}$) bestimmt und zusammen mit den Bremsansteuersignalen ($BREMS_{VA}$ und $BREMS_{HA}$) für die Bremsen an den Vorderachs- und Hinterachsstellantrieb (1, 2) ausgegeben werden.

**15.** Verwendung des Wankstabilisierungssystems nach einem der Ansprüche 1 bis 8 zur manuellen oder automatisierten Horizontierung eines Fahrzeugs um seine Längsachse im Stand, **dadurch gekennzeichnet, daß** abhängig von der entsprechenden Stellung des Fahrzeugs, z.B. am Hang oder einseitig auf einem Bordstein, oder auch, wenn das Fahrzeug mit einem einzelnen Rad in einer Vertiefung steht, die beiden Schwenkantriebe entsprechend bestromt werden, bis eine' horizontale Stellung des Fahrzeugs erreicht ist, und anschließend diese horizontale Stellung durch Schließen der Bremse fixiert wird.

**16.** Verwendung des Wankstabilisierungssystems nach einem der Ansprüche 1 bis 8 zur manuellen oder automatischen Schrägstellung eines Fahrzeugaufbaus um einen definierten Winkel, **dadurch gekennzeichnet, daß** nach Vorgabe des Neigungswinkels die Schwenkantriebe entsprechend bestromt werden und anschließend durch Schließen der Bremsen die geneigte Lage des Fahrzeugaufbaus fixiert wird.

**17.** Verwendung des Wankstabilisierungssystems nach einem der Ansprüche 1 bis 8 zum manuellen oder automatischen Anheben einzelner Räder eines Fahrzeugs im Stand, **dadurch gekennzeichnet, daß** nach Vorgabe des anzuhebenden Rads oder der anzuhebenden Räder der vordere und hintere Schwenkantrieb so bestromt wird, daß die Stabilisatorhälften diagonal verspannt werden und anschließend durch Schließen der Bremsen diese Stellung fixiert wird.

## Claims

**1.** System for the roll stabilization of vehicles, in particular motor vehicles, in which actuating means are provided, which have at least one sensor (3) for detecting a roll quantity and at least one pivoting drive (1, 2) arranged between halves (11, 12) of the front and/or rear chassis stabilizer, the said actuating means bringing about a prestressing of the stabilizer halves (11, 12) for the reduction or suppression of the rolling movement and, in roll situation, the said actuating means applying a countermoment to the vehicle body as a function of output signals from the sensor (3), the pivoting drive being an electromechanical pivoting drive (1, 2) and having means (7) for blocking the mutual pivoting of the stabilizer halves (11, 12), **characterized in that** the means (7) for blocking the mutual pivoting of the stabilizer halves (11, 12) are activated by a control unit (4).

**2.** System for roll stabilization according to Claim 1, **characterized in that** the blocking means have an electromagnetically opening or electromagnetically closing brake (7) which, in the case of each pivoting drive (1, 2), is arranged between a respective pivoting motor (6) and a reducing gear (8) of the latter.

**3.** System for roll stabilization according to Claim 2, **characterized in that**, in the case of an electromagnetically opening brake (7), means are provided which block the electromechanical pivoting drive (1, 2) on the front and rear axle (VA, HA) in the event of system failure in a neutral middle position only.

**4.** System for roll stabilization according to one of the preceding claims, **characterized in that** a clutch is inserted between the drive and the driven side of the electromechanical pivoting drive (1, 2) in such a way that the electric pivoting motor (6) and/or the reducing gear (8) or individual gear stages of the latter can be separated from the driven side of the pivoting drive (1, 2).

**5.** System for roll stabilization according to one of Claims 2-4, **characterized in that** the system contains a brake-clutch combination.

**6.** System for roll stabilization according to one of the preceding claims, **characterized in that** the at least one sensor (3) is a transverse-acceleration sensor.

**7.** System for roll stabilization according to one of the preceding claims, **characterized in that**, furthermore, a sensor for detecting the steering-wheel angle ($\bar{a}_{LR}$) and a further sensor for detecting the vehicle speed ($v_x$) are provided.

**8.** System for roll stabilization according to one of the preceding claims, **characterized in that** the sensor or sensors, electromechanical actuating drive and the brake are connected in each case to an electronic control unit (4) for generating corresponding activation signals for the electromechanical pivoting drive and the brake of the front axle (VA) and rear axle (HA) in each case.

**9.** Method for the roll stabilization of vehicles, in particular motor vehicles, with the aid of a roll stabilization system according to one of Claims 1-8, **characterized by** the following steps (blocks C, D, G):

I. determination of the maximum actuatable moment from the quantities:

- maximum motor moment of the electric pivoting motor,
- gear reduction of the gear,
- efficiency, and
- lost moments;

II. determination of the required actuating moment;

III. opening of the brake and application of the moment on the low-moment side of the pivoting motor (6) when the required actuating moment lies below the maximum actuating moment;

IV. closing of the brake (7) when the required actuating moment exceeds the maximum actuating moment of the pivoting drive; and

V. generation of desired currents for the pivoting motors in order to generate a countermoment serving for roll stabilization.

**10.** Method for roll stabilization according to Claim 9, **characterized in that**, in step II (Block C), the actuating moment ($M_x$), required for roll support, on the vehicle body is determined from the detected steering-wheel angle ($\bar{a}_{LR}$), from the detected transverse acceleration ($a_o$) and from the detected travelling speed ($v_x$) .

**11.** Method for roll stabilization according to Claim 10, **characterized in that**, in step II (Block C), additionally, a correcting moment ($M_{x, VOR}$) relating to the vehicle body is determined.

**12.** Method for roll stabilization according to Claim 11, **characterized in that**, furthermore, the moments ($M_x$, $M_{x, VOR}$) relating to the vehicle body are transformed, taking into account a rolling-moment distribution (WMV) and the geometric conditions, to form corresponding desired moments ($M_{ST, VA}$, $M_{ST, HA}$, $M_{ST, VA, VOR}$, $M_{ST, HA, VOR}$) of the actuating members on the front and rear axle (VA, HA) (Block C).

**13.** Method for roll stabilization according to Claim 12, **characterized in that**, furthermore, the corresponding desired moments ($M_{ST, VA}$, $M_{ST, HA}$) for the front and rear axle (VA, HA) are adapted, taking into account the regulated-quantity limitation, and **in that** brake activation signals (Brems-A-VA, Brems-A-HA) for steps III and IV are generated on the basis of the adapted desired moments ($M^*_{ST, VA}$ and $M^*_{ST, HA}$) and of a driving state (FZST) (stationary or non-stationary) determined on the basis of the detected steering angle ($\bar{a}_{LR}$) and of the detected transverse acceleration ($a_o$) (Block D).

**14.** Method for roll stabilization according to one of Claims 9 to 13, **characterized in that**, in step V (Block G), the desired currents ($I_{SOLL, VA}$ and $I_{SOLL, HA}$) are determined from the adapted desired moments ($M^*_{ST, VA}$ and $M^*_{ST, HA}$), from the correcting moments ($M_{ST, VA, VOR}$ and $M_{ST, VA, VOR}$) and from the angular speeds $_{ST, VA}$ and $_{ST, HA}$) and are mitted, together with the brake activation signals ($BREMS_{VA}$ and $BREMS_{HA}$) for the brakes, to the front-axle and rear-axle actuating drive (1, 2).

**15.** Use of the roll stabilization system according to one of Claims 1 to 8 for the manual or automated horizontal levelling of a vehicle at standstill about its longitudinal axis, **characterized in that**, as a function of the corresponding position of the vehicle, for example on a slope or offset on a kerbstone or else when the vehicle is standing with a single wheel in a depression, current is applied correspondingly to the two pivoting drives, until a horizontal position of the vehicle is reached, and, subsequently, this horizontal position is fixed as a result of the closing of the brake.

**16.** Use of the roll stabilization system according to one of Claims 1 to 8 for the manual or automatic inclination of a vehicle body through a defined angle, **characterized in that**, after stipulation of the angle of inclination, current is applied correspondingly to the pivoting drives, and, subsequently, the inclined position of the vehicle body is fixed as a result of the closing of the brakes.

**17.** Use of the roll stabilization system according to one of Claims 1 to 8 for the manual or automatic raising of individual wheels of a vehicle at standstill, **characterized in that**, after the stipulation of the wheel to be raised or of the wheels to be raised, current is applied to the front and the rear pivoting drive in such a way that the stabilizer halves are braced diagonally, and, subsequently, this position is fixed as a result of the closing of the brakes.

**Revendications**

**1.** Système pour stabiliser des véhicules par rapport au roulis, en particulier des véhicules automobiles, avec des moyens de réglage qui présentent au moins un capteur (3) pour l'acquisition d'une grandeur de roulis et au moins un entraînement de pivotement(1, 2) disposé entre des moitiés (11, 12) du stabilisateur de train avant et/ou arrière, qui effectuent une précontrainte des moitiés de stabilisateur (11, 12) pour réduire ou supprimer le mouvement de roulis et qui, en cas de roulis, appliquent un contre-couple sur la structure du véhicule en fonction de signaux de sortie du capteur (3), l'entraînement de pivotement étant un entraînement de pivotement électromécanique (1, 2) et avec des moyens (7) pour le blocage du pivotement réciproque des moitiés de stabilisateur (11, 12),
**caractérisé en ce que**
les moyens (7) pour le blocage du pivotement réciproque des moitiés de stabilisateur (11, 12) sont commandés par un appareil de commande (4).

**2.** Système de stabilisation par rapport au roulis selon la revendication 1,
**caractérisé en ce que**
les moyens de blocage présentent un frein (7) s'engageant de façon électromagnétique ou se dégageant de façon électromagnétique disposé à chaque entraînement de pivotement (1, 2) entre un moteur de pivotement (6) respectif et une transmission de démultiplication (8) de celui-ci.

**3.** Système de stabilisation par rapport au roulis selon la revendication 2,

**caractérisé en ce que**
lorsque le frein (7) se dégage de façon électromagnétique, des moyens bloquent uniquement en position intermédiaire neutre l'entraînement de pivotement électromagnétique (1, 2) des essieux avant et arrière (VA, HA) en cas de panne du système.

**4.** Système de stabilisation par rapport au roulis selon l'une quelconque des revendications précédentes,
**caractérisé en ce qu'**
entre le côté entrée et sortie de l'entraînement de pivotement électromagnétique (1, 2), un accouplement est mis en oeuvre de manière à ce que le moteur électrique de pivotement, (6) et/ou la transmission de démultiplication (8) ou des étages isolés de transmission de celle-ci puissent être séparés du côté sortie de l'entraînement de pivotement (1, 2)

**5.** Système de stabilisation par rapport au roulis selon l'une quelconque des revendications 2 à 4,
**caractérisé en ce que**
le système contient une combinaison freins - embrayage.

**6.** Système de stabilisation par rapport au roulis selon l'une quelconque des revendications précédentes,
**caractérisé en ce qu'**
au moins un capteur (3) est un capteur d'accélération transversale.

**7.** Système de stabilisation par rapport au roulis selon l'une quelconque des revendications précédentes,
**caractérisé en ce qu'**
en outre un capteur pour la saisie de l'angle de roue directrice ($ä_{LR}$) et un autre capteur pour la vitesse du véhicule ($v_X$) sont prévus.

**8.** Système de stabilisation par rapport au roulis selon l'une quelconque des revendications précédentes,
**caractérisé en ce que**
le capteur ou les capteurs, l'entraînement de réglage électromagnétique et les freins sont respectivement reliés à un appareil de commande électronique (4) pour générer des signaux de commande correspondants pour l'entraînement de pivotement électromécanique et les freins, respectivement, de l'essieu avant (VA) et de l'essieu arrière (HA).

**9.** Procédé pour stabiliser des véhicules par rapport au roulis, en particulier des véhicules automobiles, à l'aide d'un système de stabilisation par rapport au roulis selon l'une quelconque des revendications 1 à 8,
**caractérisé par** les étapes suivantes (blocs C, D, G)

I. détermination du couple maximal réglable à partir des grandeurs :

- couple moteur maximal du moteur électrique de pivotement,
- démultiplication de transmission de la boîte de vitesse,
- rendement et
- couple de perte ;

II. acquisition du couple de réglage demandé ;
III. dégagement des freins et application du couple sur le côté de couple bas du moteur de pivotement (6) lorsque le couple de réglage demandé est inférieur au couple de réglage maximal ;
IV. engagement des freins 7 lorsque le couple de réglage demandé dépasse le couple de réglage maximal de l'entraînement de pivotement et
V. génération de courants de consigne pour les moteurs de pivotement pour la génération d'un contre-couple servant à la stabilisation par rapport au roulis.

**10.** Procédé de stabilisation par rapport au roulis selon la revendication 9,
**caractérisé en ce qu'**
à l'étape II (bloc C) le couple de réglage (Mx) demandé sur la structure de véhicule pour le support du roulis est déterminé à partir de l'angle de roue directrice ($ä_{LR}$) saisi, l'accélération transversale ($a_Q$) saisie et la vitesse de véhicule ($V_X$) saisie.

**11.** Procédé de stabilisation par rapport au roulis selon la revendication 10,

**caractérisé en ce qu'**
à l'étape II (bloc C) en outre un couple de dérivation ($M_X$, $M_{X\ VOR}$) se référant à la structure du véhicule est déterminé.

**12.** Procédé de stabilisation par rapport au roulis selon la revendication 11,
**caractérisé en ce qu'**
en outre les couples ($M_X$, $M_{X\ VOR}$) se référant à la structure du véhicule sont transformés (bloc C) en prenant en compte une répartition de couple de roulis (WMV) ainsi que les rapports géométriques aux couples de consigne correspondants ($M_{ST,\ VA}$, $M_{ST,\ HA}$, $M_{ST,\ VA,\ VOR,}$ $M_{ST,\ HA,\ VOR}$) des organes de réglage sur les essieux avant et arrière (VA, HA).

**13.** Procédé de stabilisation par rapport au roulis selon la revendication 12,
**caractérisé en ce qu'**
en outre les couples de consigne correspondants ($M_{ST,\ VA,}$ $M_{ST,\ HA}$) de l'axe avant et arrière (VA, HA) sont adaptés en prenant en compte la limitation de grandeurs de réglage, et des signaux de commande de frein (Brems-A-VA, Brems-A-HA) pour les étapes III et IV sont générés (bloc D) sur la base de couples de consigne adaptés ($M^*_{ST,\ VA}$ et $M^*_{ST,\ HA}$) et d'un état actuel de circulation (FZST), (stationnaire ou non stationnaire), déterminé sur la base de l'angle de direction ($ä_{LR}$) saisie ainsi que de l'accélération transversale ($a_0$) saisie.

**14.** Procédé de stabilisation par rapport au roulis selon l'une quelconque des revendications 9 à 13,
**caractérisé en ce qu'**
à l'étape 5 (bloc G), les courants de consigne ($I_{SOLL,\ VA}$ et $I_{SOLL,\ HA}$) sont déterminés à partir des couples de consigne adaptés ($M^*_{ST,\ VA}$ et $M^*_{ST,\ HA}$), des couples de dérivation ($M_{ST,\ VA,\ VOR}$ et $M_{ST,\ HA,\ VOR}$) ainsi que des vitesses angulaires ($_{ST,\ VA}$ et $_{ST,\ HA}$) et sont dirigés vers l'entraînement d'essieu avant et d'essieu arrière (1, 2), ensemble, avec les signaux de commande de frein ($BREMS_{VA}$ et $BREMS_{HA}$) pour les freins.

**15.** Utilisation du système de stabilisation par rapport au roulis selon l'une quelconque des revendications 1 à 8 pour la mise à l'horizontale autour de son axe longitudinal manuelle ou automatisée d'un véhicule automobile à l'arrêt,
**caractérisé en ce qu'**
en fonction de la position correspondante du véhicule, par exemple, inclinée ou d'un côté sur une bordure de trottoir ou également lorsque le véhicule est dans un creux par le biais d'une seule roue, les deux entraînements de pivotement sont alimentés de façon correspondante jusqu'à ce qu'une position horizontale du véhicule soit atteinte et qu'ensuite cette position horizontale est conservée par engagement des freins.

**16.** Utilisation du système de stabilisation par rapport au roulis selon l'une quelconque des revendications 1 à 8 pour la mise en biais selon un angle défini manuelle ou automatique d'une structure de véhicule,
**caractérisé en ce qu'**
après détermination de l'angle d'inclinaison, les entraînements de pivotement sont alimentés de façon correspondante et qu'ensuite, par l'engagement des freins, la position inclinée de la structure du véhicule est conservée.

**17.** Utilisation du système de stabilisation par rapport au roulis selon l'une quelconque des revendications 1 à 8 pour le levage manuel ou automatique de roues d'un véhicule à l'arrêt,
**caractérisé en ce que**
après détermination de la roue à lever ou des roues à lever, l'entraînement de pivotement avant et arrière est alimenté de manière à ce que les moitiés de stabilisateur soient contraintes en diagonale et qu'ensuite, par engagement des freins, cette position est conservée.

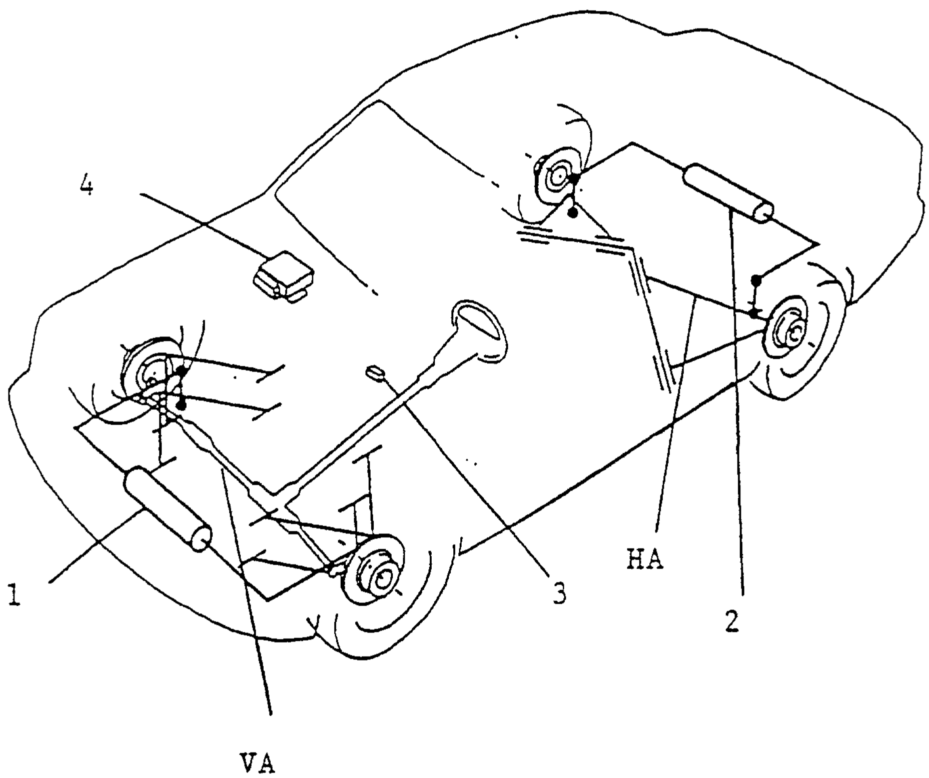


Fig. 1

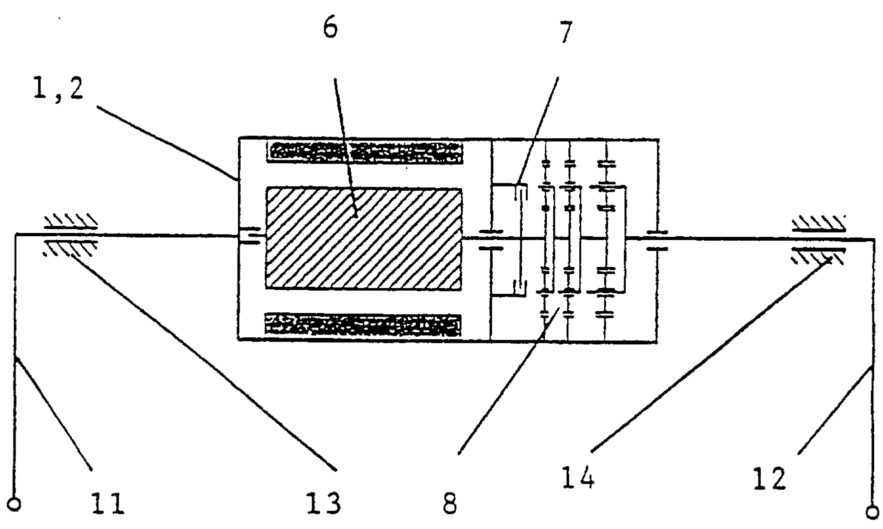


Fig. 2

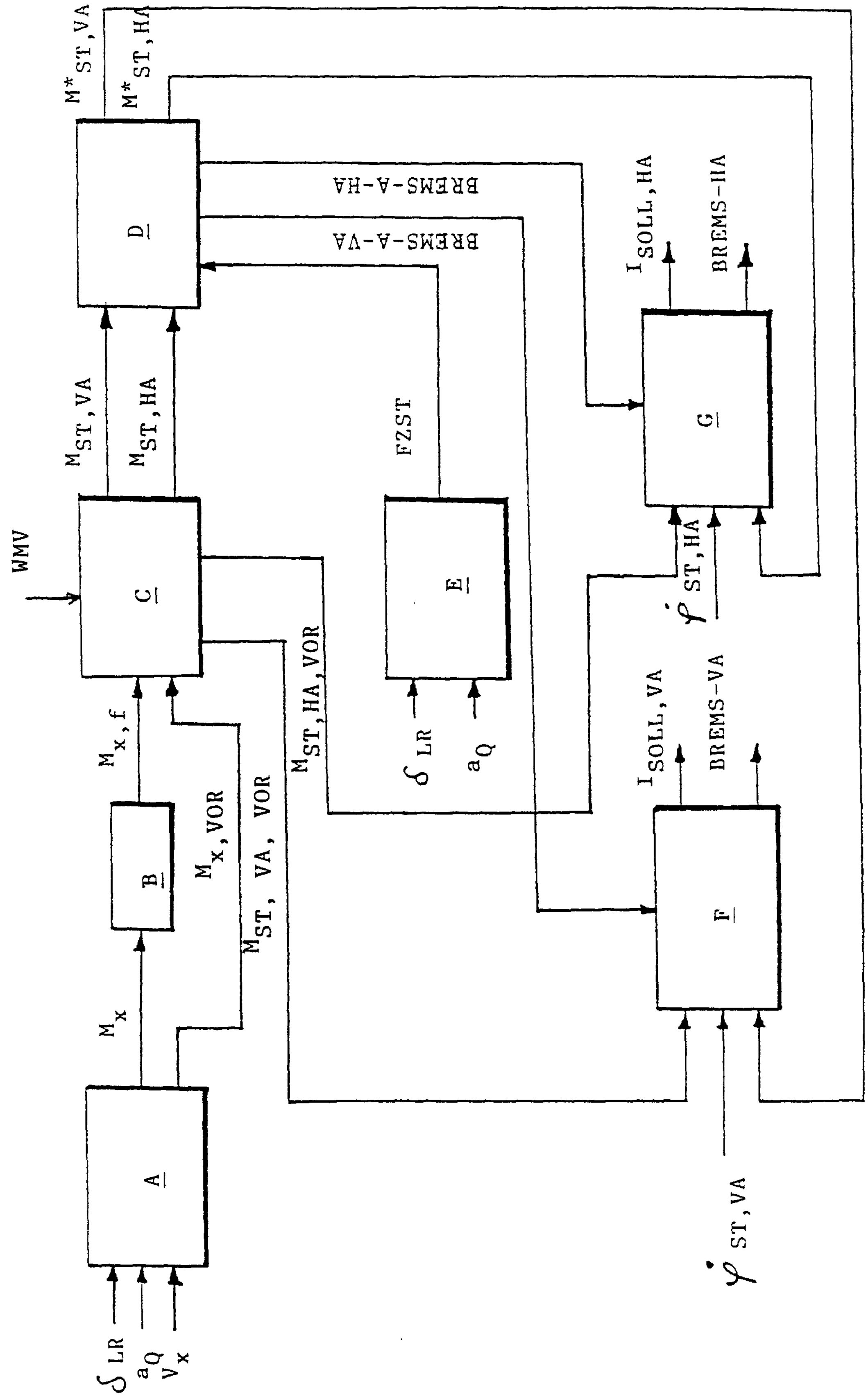
A
B
C
D
E
F
G
δ LR
aQ
vx
Mx
Mx,f
Mx,VOR
MST, VA, VOR
WMV
MST,VA
MST,HA
MST,HA,VOR
M*ST,VA
M*ST,HA
FZST
BREMS-A-VA
BREMS-A-HA
ISOLL,HA
BREMS-HA
ISOLL,VA
BREMS-VA
φ̇ ST,HA
φ̇ ST,VA

Fig. 3

Fig. 4A

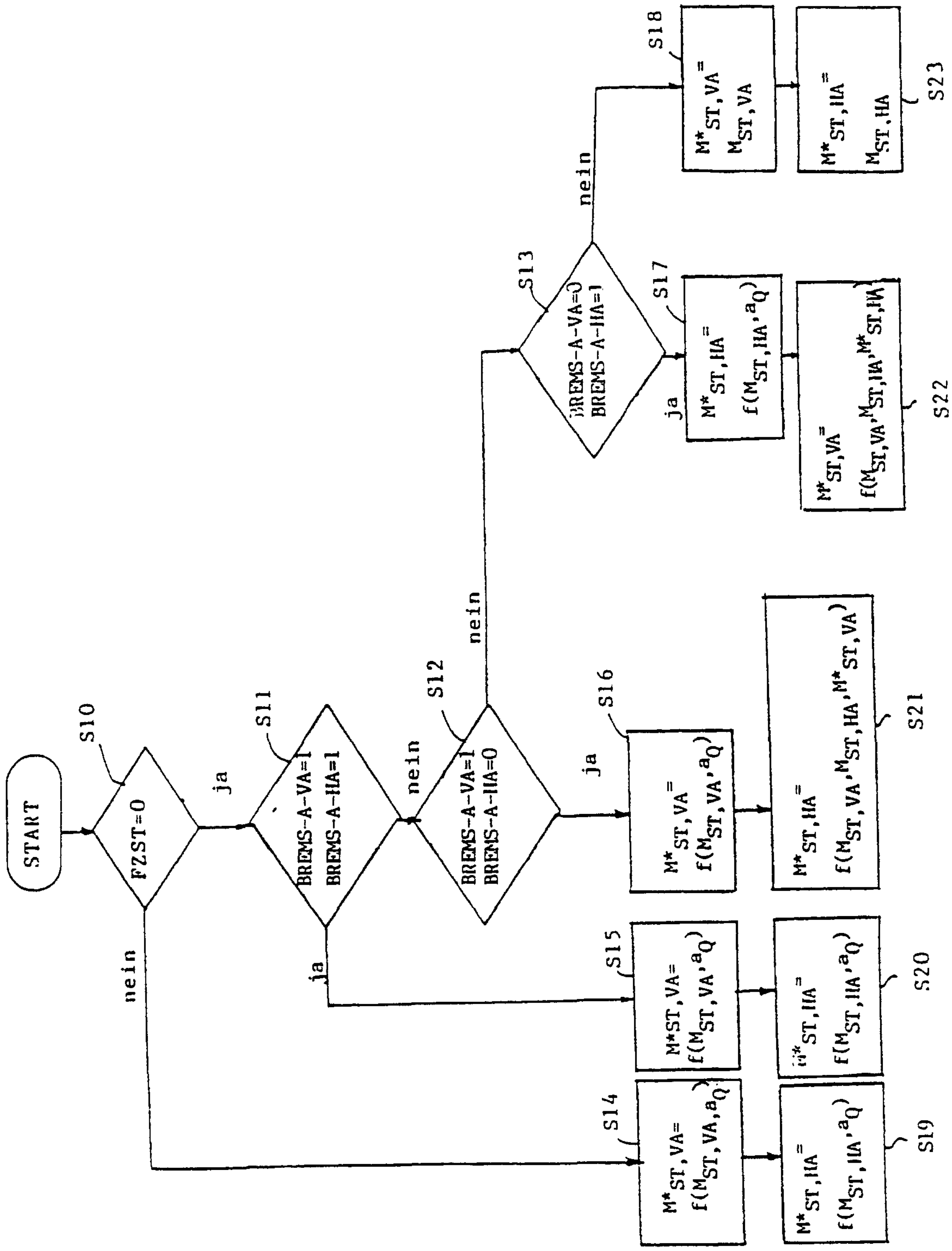
START
FZST=0
S10
ja
nein
S11
BREMS-A-VA=1
BREMS-A-HA=1
S12
BREMS-A-VA=1
BREMS-A-HA=0
S13
BREMS-A-VA=0
BREMS-A-HA=1
S14
S15
S16
S17
S18
S19
S20
S21
S22
S23

Fig. 4B

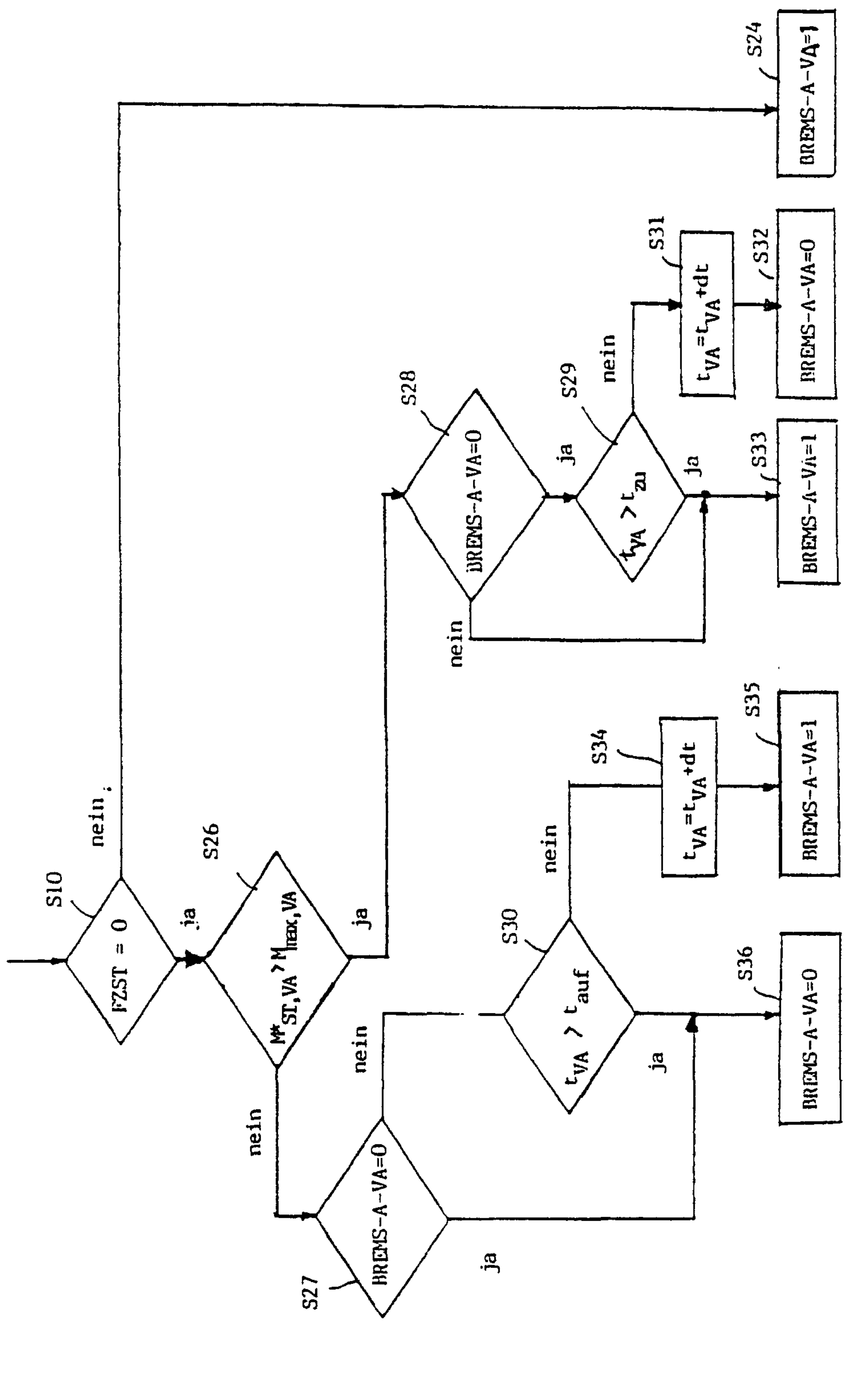
S10
FZST = 0
nein
ja
S26
$M^*_{ST,VA} > M_{max,VA}$
ja
nein
S27
BREMS-A-VA=0
ja
nein
S28
BREMS-A-VA=0
ja
nein
S29
$t_{VA} > t_{zu}$
ja
nein
S30
$t_{VA} > t_{auf}$
ja
nein
S31
$t_{VA}=t_{VA}+dt$
S34
$t_{VA}=t_{VA}+dt$
S24
BREMS-A-VA=1
S32
BREMS-A-VA=0
S33
BREMS-A-VA=1
S35
BREMS-A-VA=1
S36
BREMS-A-VA=0

Fig. 4C

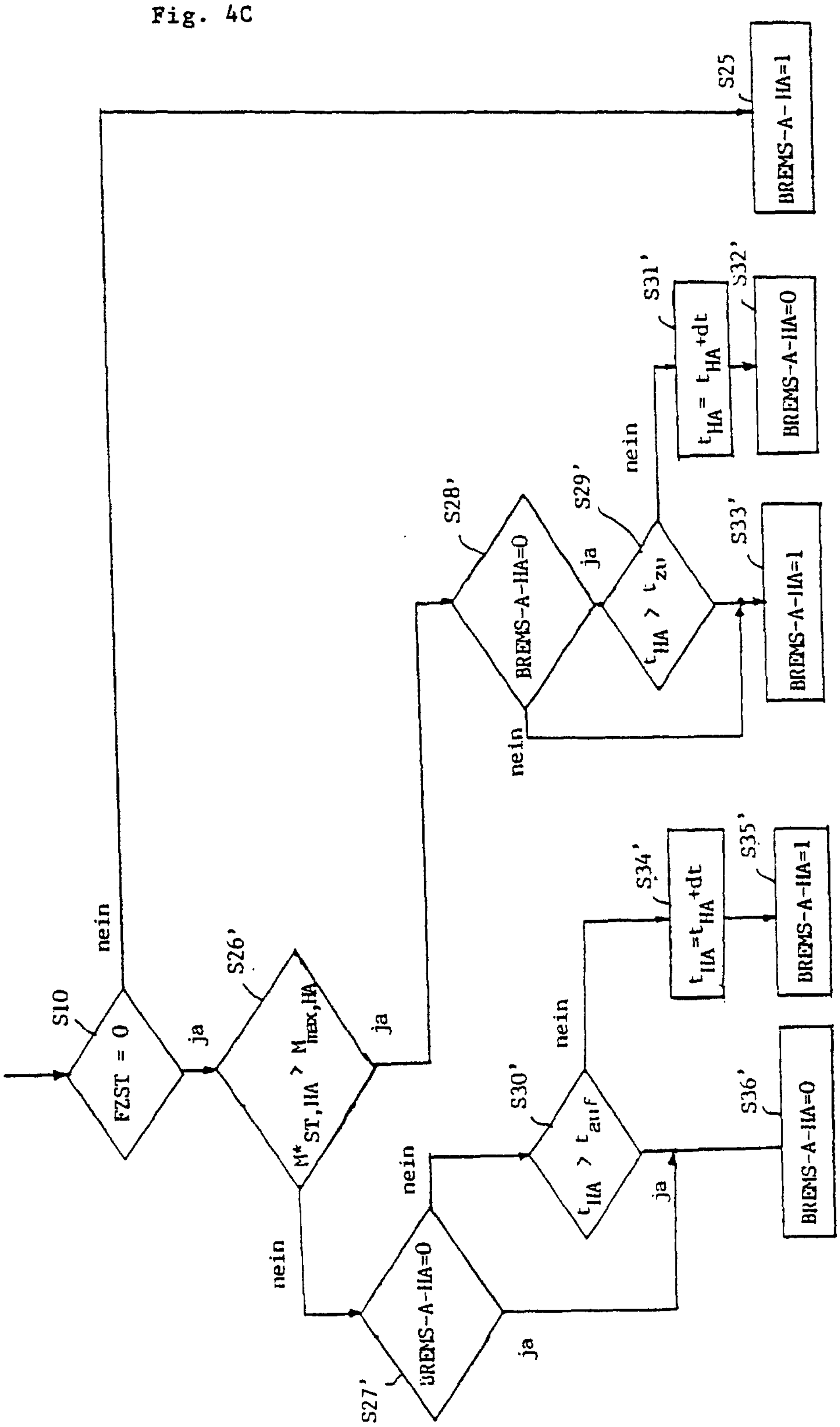
S10
FZST = 0
nein
ja
S26'
$M^*_{ST,HA} > M_{max,HA}$
S27'
BREMS-A-HA=0
S28'
BREMS-A-HA=0
S29'
$t_{HA} > t_{zu}$
S30'
$t_{HA} > t_{auf}$
S31'
$t_{HA} = t_{HA}+dt$
S32'
BREMS-A-HA=0
S33'
BREMS-A-HA=1
S34'
$t_{HA}=t_{HA}+dt$
S35'
BREMS-A-HA=1
S36'
BREMS-A-HA=0
S25
BREMS-A-HA=1

FIG. 4D

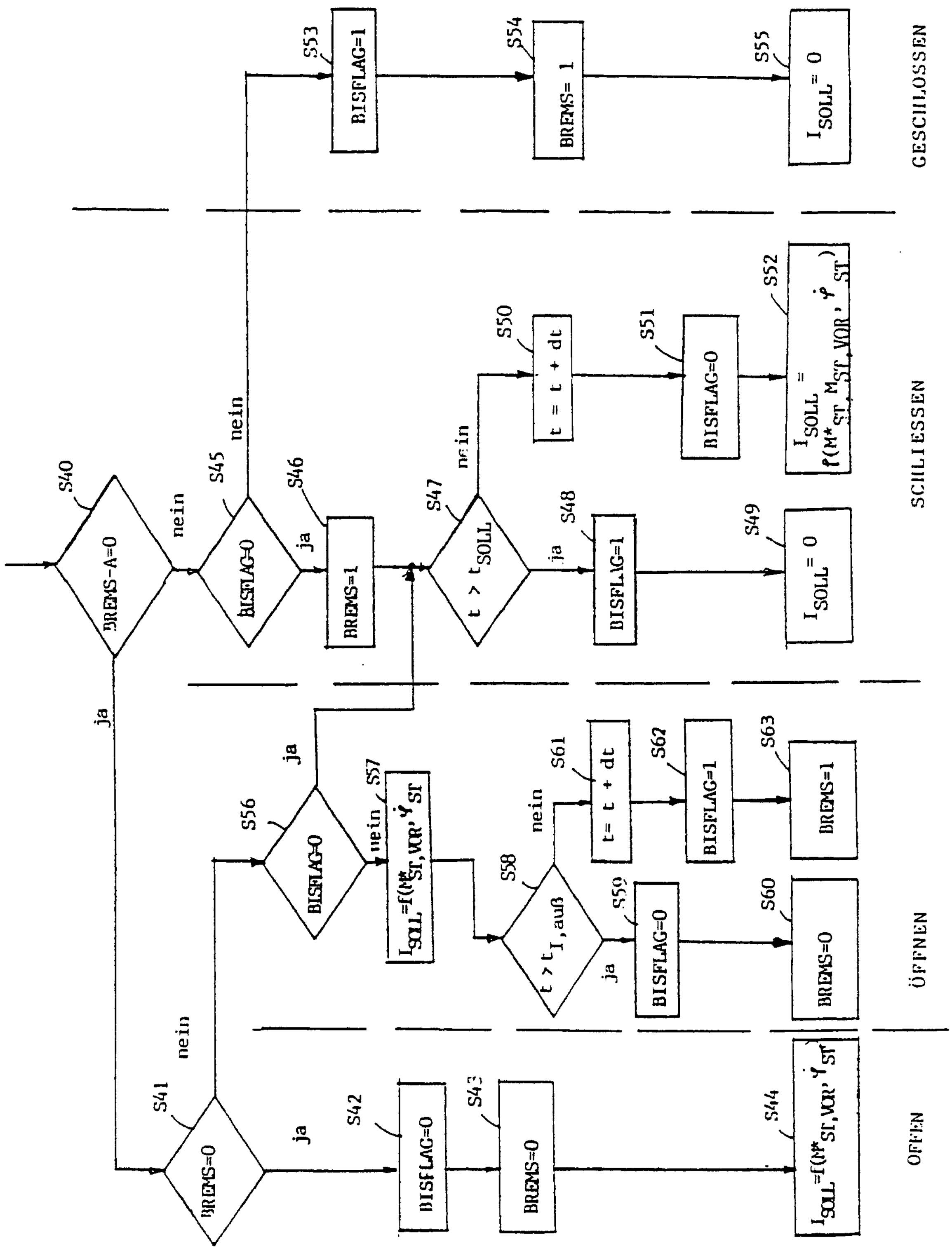
GESCHLOSSEN
SCHLIESSEN
ÖFFNEN
OFFEN
S40 BREMS-A=0
S41 BREMS=0
S42 BISFLAG=0
S43 BREMS=0
S45 BISFLAG=0
S46 BREMS=1
S47 t > tSOLL
S48 BISFLAG=1
S49 ISOLL = 0
S50 t = t + dt
S51 BISFLAG=0
S53 BISFLAG=1
S54 BREMS= 1
S55 ISOLL = 0
S56 BISFLAG=0
S58 t > tI,auß
S60 BREMS=0
S61 t= t + dt
S62 BISFLAG=1
S63 BREMS=1
ja
nein